# FASCICULE DE BREVET EUROPEEN

(11) **EP 3 803 177 B1**
(45) Date de publication et mention de la délivrance du brevet: **01.11.2023**
(21) Numéro de dépôt: 19725179.6
(22) Date de dépôt: 22.05.2019
(51) Int. Cl.: F16L 21/035, B29C 53/08, B29D 23/00

(54) **PROCÉDÉ DE FABRICATION D'UN CIRCUIT DE FLUIDE AVEC UN RACCORD DE CONNEXION COMPORTANT UNE SURFACE DE BUTEE OBLIQUE**
VERFAHREN ZUR HERSTELLUNG EINES FLÜSSIGKEITSKREISLAUFS MIT EINEM VERBINDUNGSSTÜCK MIT EINER SCHRÄGEN ANSCHLAGFLÄCHE
METHOD OF MANUFACTURING A FLUID CIRCUIT WITH A CONNECTION FITTING HAVING AN OBLIQUE ABUTMENT SURFACE

(30) Priorité: 25.05.2018 FR 1854443
(43) Date de publication de la demande: 14.04.2021
(73) Titulaire: Airbus Atlantic, 17300 Rochefort (FR)
(72) Inventeur: PERHERIN, Daniel, 44600 SAINT NAZAIRE (FR)
(74) Mandataire: Argyma
(86) Numéro de dépôt international: PCT/EP2019/063255
(87) Numéro de publication internationale: WO 2019/224271

(56) Documents cités:
- DE-A1-102008 030 195
- US-A1- 2010 133 807
- US-A1- 2015 362 104

## Description

### DOMAINE TECHNIQUE GENERAL ET ART ANTERIEUR

La présente invention concerne le domaine des circuits de fluide dans un aéronef, par exemple, un circuit d'eau potable, d'eaux usées, de drainage, etc.

Le document US 2015/362104 A1 montre un tuyau dans lequel un tube de raccordement se connecte de manière amovible entre une première unité de tuyauterie et une deuxième unité de tuyauterie, formant ainsi le tuyau. Une première bague centrale est située entre une première surface de connexion du tube de raccordement et la première unité de tuyauterie. La première surface de connexion est inclinée par rapport à un plan orthogonal à la direction de l'axe du tuyau. Un joint torique est monté dans une première rainure formée sur une surface circonférentielle extérieure de la première paroi circonférentielle de la bague centrale. Le joint torique est pris en sandwich par la première surface de connexion et une troisième surface de connexion de la première unité de tuyauterie lorsqu'elle est fixée à la première bague centrale.

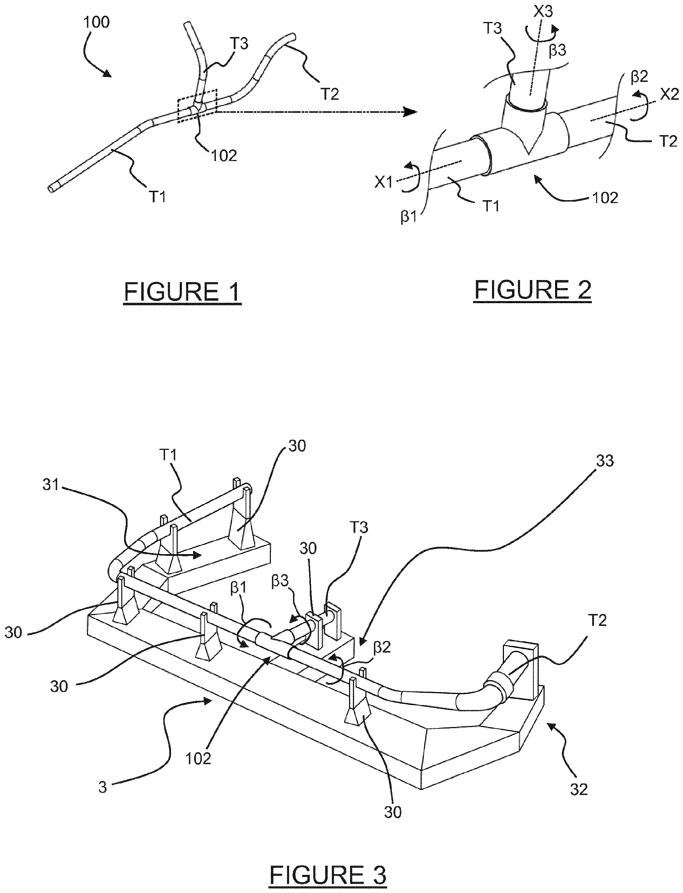

De manière connue, un circuit de fluide comporte une pluralité de canalisations reliées mécaniquement et fluidiquement entre elles. A titre d'exemple, en référence aux figures 1 et 2, il est représenté un circuit de fluide 100 comportant trois canalisations T1, T2, T3 connectées entre elles au niveau d'un raccord de connexion 102. Dans un aéronef, les canalisations T1, T2, T3 sont généralement incurvées par cintrage afin de s'adapter à la configuration de l'aéronef dans lequel elles doivent être montées.

Le raccordement de canalisations cintrées T1, T2, T3 est complexe à mettre en oeuvre étant donné qu'il nécessite de réaliser un sertissage, un soudage ou un collage du raccord de connexion 102 auxdites canalisations cintrées T1, T2, T3 ou un soudage direct des canalisations T1, T2, T3 entre elles. Lors du raccordement, il est nécessaire d'orienter et de maintenir fixement les canalisations cintrées T1, T2, T3 et ledit raccord de connexion 102 au moyen d'un dispositif de calage, appelé également « gabarit ». Comme illustré à la figure 3, un dispositif de calage 3 est réalisé sur mesure et possède une forme adaptée aux canalisations cintrées T1, T2, T3. Autrement dit, pour chaque type de circuit de fluide et chaque forme de canalisations T1, T2, T3, il est nécessaire de prévoir un dispositif de calage 3 adapté, ce qui nécessite un investissement important et une gestion des gabarits contraignante. De plus, le raccordement nécessite de nombreuses étapes de manipulation, de positionnement, de bridage et d'assemblage qui augmentent la durée d'un raccordement et donc son coût.

Dans cet exemple, toujours en référence à la figure 3, le dispositif de calage 3 comporte trois branches 31, 32, 33 pour coopérer respectivement avec les canalisations T1, T2, T3. En outre, chaque branche 31, 32, 33 comporte des organes de support 30 de dimensions adaptées au cintrage de chaque canalisation T1, T2, T3. Un tel dispositif de calage 3 permet en outre de définir précisément l'orientation angulaire entre les canalisations T1, T2, T3 lors du raccordement. Un tel procédé de raccordement est onéreux et complexe à mettre en oeuvre étant donné qu'il nécessite de fabriquer un dispositif de calage pour chaque type de raccordement.

Par ailleurs, en cas de défaut, il est nécessaire de mettre au rebut les canalisations T1-T3 ainsi que le raccord de connexion 2, ce qui présente un inconvénient important.

Afin d'éliminer cet inconvénient, il a été proposé par la demande de brevet FR3045772A1, de prévoir à une extrémité ouverte d'un corps tubulaire creux un premier organe de connexion rapide mécanique, qui comporte un mécanisme de détrompage angulaire, adapté pour coopérer de manière étanche avec un deuxième organe de connexion rapide mécanique d'une canalisation de circuit de fluide d'aéronef selon une position angulaire prédéterminée. En pratique, le mécanisme de détrompage comporte des éléments d'orientation espacés à la périphérie d'une ouverture du raccord de connexion. Les éléments d'orientation peuvent se présenter sous la forme d'ergots, de doigts d'insertions, d'encoches, d'orifices, etc. Lors de l'assemblage, le raccord doit être aligné précisément avec le corps tubulaire puis le raccord et le corps tubulaire doivent être orientés l'un par rapport à l'autre afin de permettre une connexion selon l'angle de connexion prédéterminé. En pratique, il est complexe pour un opérateur de maintenir l'alignement entre le raccord et le corps tubulaire. En outre, une telle connexion n'offre pas les mêmes garanties en termes d'étanchéité qu'une connexion définitive selon l'art antérieur. Son coût est par ailleurs élevé.

L'invention a donc pour but d'éliminer au moins certains de ces inconvénients en proposant un nouveau procédé de fabrication afin de réaliser un circuit de fluide pour aéronef de manière rapide et pratique tout en limitant les coûts.

### PRESENTATION GENERALE DE L'INVENTION

A cet effet, l'invention concerne un procédé de fabrication d'un circuit de fluide comportant :
- au moins un premier corps tubulaire creux comprenant au moins une première extrémité ouverte et une deuxième extrémité ouverte qui sont reliées fluidiquement, le premier corps tubulaire creux s'étendant rectilignement selon un premier axe d'emboitement,
- au moins un raccord de connexion comprenant au moins une première extrémité ouverte et une deuxième extrémité ouverte qui sont reliées fluidiquement, la première extrémité ouverte du premier corps tubulaire creux étant connectée à la première extrémité ouverte du raccord de connexion de manière étanche selon un premier axe d'emboitement,
- une desdites premières extrémités ouvertes étant une extrémité de type mâle, l'autre desdites premières extrémités ouvertes étant de type femelle de manière à permettre un emboitement longitudinal selon le premier axe d'emboitement,
- chaque première extrémité ouverte comporte une surface de butée longitudinale, les surfaces de butée longitudinale coopérant par complémentarité de formes de manière à former une portion cylindrique s'étendant selon le premier axe d'emboitement;
le procédé comporte :
- une étape de formation de la surface de butée longitudinale à une première extrémité ouverte du premier corps tubulaire creux, la surface de butée longitudinale s'étendant dans un plan d'interface qui est incliné d'un premier angle de butée par rapport au plan orthogonal au premier axe d'emboitement,
- une étape d'orientation angulaire de la surface de butée longitudinale du premier corps tubulaire creux dans une machine de cintrage à une position angulaire de référence,
- une étape de cintrage d'une portion longitudinale du premier corps tubulaire creux dans la position angulaire de référence, et
- une étape de connexion étanche de la première extrémité ouverte du premier corps tubulaire creux à la première extrémité ouverte du raccord de connexion de manière étanche selon le premier axe d'emboitement, les surfaces de butée longitudinale entrant en contact dans un plan d'interface qui est incliné d'un premier angle de butée par rapport au plan orthogonal au premier axe d'emboitement de manière à permettre un détrompage angulaire, la première extrémité ouverte du premier corps tubulaire creux étant orientée par rapport à la première extrémité ouverte du raccord de connexion selon une première position angulaire prédéterminée par rapport au premier axe d'emboitement.

Grâce à l'invention, le premier corps tubulaire creux est fabriqué de manière orientée afin de faciliter son assemblage ultérieur. Le procédé de fabrication peut ainsi être mis en oeuvre de manière industrielle.

On obtient ainsi un circuit de fluide qui permet de faciliter un alignement selon le premier axe d'emboitement du fait de la coopération mâle/femelle. En outre, la surface de butée longitudinale oblique permet de réaliser un détrompage angulaire aisément observable par un opérateur lors de l'assemblage. De plus, un tel détrompage angulaire est moins onéreux à réaliser qu'un détrompage utilisant des ergots ou des doigts d'insertion, ce qui est avantageux. Enfin, les surfaces de butée longitudinale permettent de réaliser un guidage jusqu'à la première position angulaire prédéterminée, ce qui accélère l'assemblage.

De préférence, le premier angle de butée est compris entre 20° et 70°, de préférence, entre 30° et 45°. Cela permet avantageusement d'assurer un compromis entre les performances de détrompage angulaire, d'industrialisation et d'étanchéité.

De manière avantageuse, chaque surface de butée longitudinale possède une forme elliptique qui est simple et rapide à réaliser par découpage. Une telle forme elliptique peut être réalisée directement dans une machine de cintrage.

De manière préférée, la première extrémité ouverte de type mâle comporte un insert cylindrique creux et une surface de butée longitudinale s'étendant sur la surface extérieure de l'insert cylindrique creux. Ainsi, l'insert permet d'assurer un centrage et un alignement avant le détrompage angulaire.

Selon un aspect préféré, la première extrémité ouverte de type femelle se présente sous la forme d'une chemise cylindrique de guidage. Ainsi, la chemise permet d'assurer un centrage et un alignement.

De manière préférée, le circuit de fluide comporte au moins un raccord de piquage comprenant au moins une première extrémité ouverte et une deuxième extrémité ouverte qui sont reliées fluidiquement, la première extrémité ouverte du raccord de piquage étant connectée de manière étanche dans une ouverture latérale du premier corps tubulaire creux, la deuxième extrémité ouverte du raccord de piquage s'étendant selon un deuxième axe d'emboitement, la deuxième extrémité ouverte comportant une surface de butée longitudinale inclinée d'un deuxième angle de butée par rapport au plan orthogonal au deuxième axe d'emboitement de manière à permettre un détrompage angulaire.

L'utilisation d'un raccord de piquage permet de réaliser une connexion latérale tout en assurant un détrompage angulaire performant de manière analogue au détrompage d'extrémité.

De manière préférée, le circuit de fluide comporte un deuxième corps tubulaire creux comprenant au moins une portion cintrée, au moins une première extrémité ouverte et une deuxième extrémité ouverte qui sont reliées fluidiquement, la deuxième extrémité ouverte du deuxième corps tubulaire creux étant connectée à la deuxième extrémité ouverte du raccord de piquage de manière étanche selon le deuxième axe d'emboitement,
- une desdites deuxièmes extrémités ouvertes étant une extrémité de type mâle, l'autre desdites deuxièmes extrémités ouvertes étant de type femelle de manière à permettre un emboitement longitudinal selon le deuxième axe d'emboitement,
- chaque deuxième extrémité ouverte comporte une surface de butée longitudinale, les surfaces de butée longitudinale coopérant par complémentarité de formes de manière à former une portion cylindrique s'étendant selon le deuxième axe d'emboitement, les surfaces de butée longitudinale entrant en contact dans un plan d'interface qui est incliné d'un deuxième angle de butée par rapport au plan orthogonal au deuxième d'emboitement de manière à permettre un détrompage angulaire, la deuxième extrémité ouverte du deuxième corps tubulaire creux étant orientée par rapport à la deuxième extrémité ouverte du raccord de piquage selon une deuxième position angulaire prédéterminée par rapport au deuxième axe d'emboitement.

De manière avantageuse, plusieurs corps tubulaires cintrés sont associés ensemble pour former le circuit de fluide à la forme désirée.

De manière préférée, la deuxième extrémité ouverte du deuxième corps tubulaire creux cintré étant une extrémité de type mâle, la deuxième extrémité ouverte est montée dans l'ouverture latérale du premier corps tubulaire creux. De manière avantageuse, l'extrémité mâle permet de bloquer précisément la position du raccord de piquage par rapport au premier corps tubulaire creux.

De préférence, chaque corps tubulaire creux est en matériau thermoplastique et possède, de manière préférée, une section annulaire. Le coût de fabrication ainsi que la masse sont alors réduits.

De manière préférée, le procédé comporte une étape de réalisation d'une ouverture latérale dans le premier corps tubulaire creux selon une position angulaire de référence préalablement à l'étape de cintrage.

L'ouverture latérale est également formée de manière orientée afin de faciliter son assemblage ultérieur. De manière préférée, chaque corps tubulaire creux rectiligne est découpé, ouvert et cintré dans une même machine afin de bénéficier d'un seul référentiel de fabrication.

### PRESENTATION DES FIGURES

L'invention sera mieux comprise à la lecture de la description qui va suivre, donnée uniquement à titre d'exemple, et se référant aux dessins annexés sur lesquels :
- la figure 1 est une représentation schématique d'un circuit de fluide selon l'art antérieur comprenant un raccord de connexion en T,
- la figure 2 est une représentation rapprochée du raccord de connexion de la figure 1,
- la figure 3 est une représentation schématique d'un dispositif de calage selon l'art antérieur pour l'assemblage du circuit de fluide de la figure 1,
- la figure 4 est une représentation schématique en perspective d'un circuit de fluide après assemblage,
- la figure 5 est une représentation schématique en coupe d'une connexion selon une première forme de réalisation du circuit de fluide,
- la figure 6 est une représentation schématique en perspective d'une surface de butée longitudinale elliptique définissant un point angulaire de référence,
- la figure 7 est une représentation schématique en perspective d'une connexion selon une deuxième forme de réalisation du circuit de fluide,
- la figure 8 est une représentation schématique en coupe longitudinale de la figure 7,
- la figure 9 est une représentation schématique en perspective d'une connexion à un raccord de piquage,
- la figure 10 est une représentation schématique en coupe de la connexion de la figure 9,
- la figure 11 est une représentation schématique en perspective d'un premier corps tubulaire du circuit de fluide suite à une étape de cintrage,
- la figure 12 est une représentation schématique en perspective d'un deuxième corps tubulaire du circuit de fluide suite à une étape de cintrage,
- la figure 13 est une représentation schématique en perspective du premier corps tubulaire de la figure 11 sur laquelle est monté un raccord de piquage,
- la figure 14 est une représentation schématique en perspective du premier corps tubulaire de la figure 13 sur laquelle est monté un raccord de connexion et
- la figure 15 est une représentation schématique en perspective du premier corps tubulaire connecté au deuxième corps tubulaire du circuit de fluide.

Il faut noter que les figures exposent l'invention de manière détaillée pour mettre en oeuvre l'invention, lesdites figures pouvant bien entendu servir à mieux définir l'invention le cas échéant.

### DESCRIPTION D'UN OU PLUSIEURS MODES DE REALISATION ET DE MISE EN OEUVRE

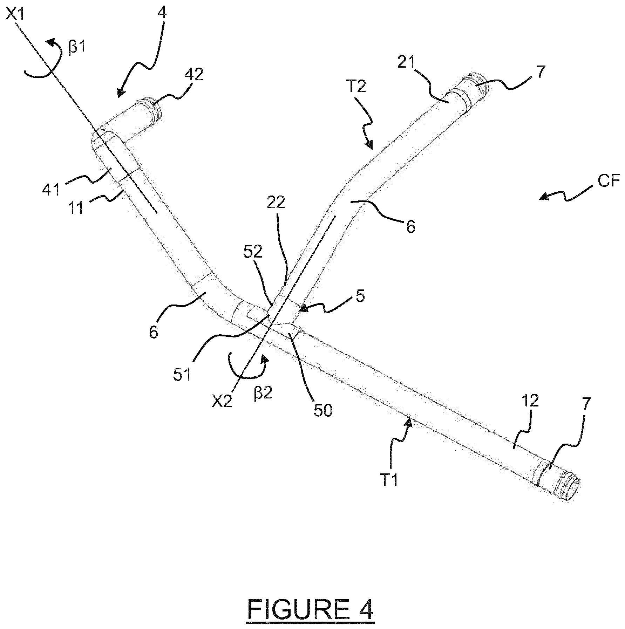

En référence à la figure 4, il est représenté un circuit de fluide CF comportant un premier corps tubulaire cintré T1, un deuxième corps tubulaire cintré T2, un raccord de connexion 4 et un raccord piquage 5. Les différents éléments du circuit de fluide CF vont dorénavant être présentés de manière détaillée.

En référence à la figure 4, le premier corps tubulaire creux T1 comprend une première extrémité ouverte 11 et une deuxième extrémité ouverte 12 qui sont reliées fluidiquement. De manière préférée, le premier corps tubulaire creux T1 s'étend longitudinalement et comprend une ou plusieurs portions cintrées 6. Dans cet exemple, le premier corps tubulaire creux T1 est réalisé en matériau thermoplastique et possède une section annulaire.

Dans cet exemple, toujours en référence à la figure 4, le raccord de connexion 4 comprend une première extrémité ouverte 41 et une deuxième extrémité ouverte 42 qui sont reliées fluidiquement. Néanmoins, il va de soi que le raccord de connexion pourrait comprendre plus de deux extrémités ouvertes 41, 42. Le raccord de connexion 4 possède un corps coudé à 90° mais il va de soi que l'inclinaison du corps pourrait être différente. Dans cet exemple de réalisation, en référence à la figure 4, la première extrémité ouverte 11 du premier corps tubulaire creux T1 est connecté à la première extrémité ouverte 41 du raccord de connexion de manière étanche 4 selon un premier axe d'emboitement X1.

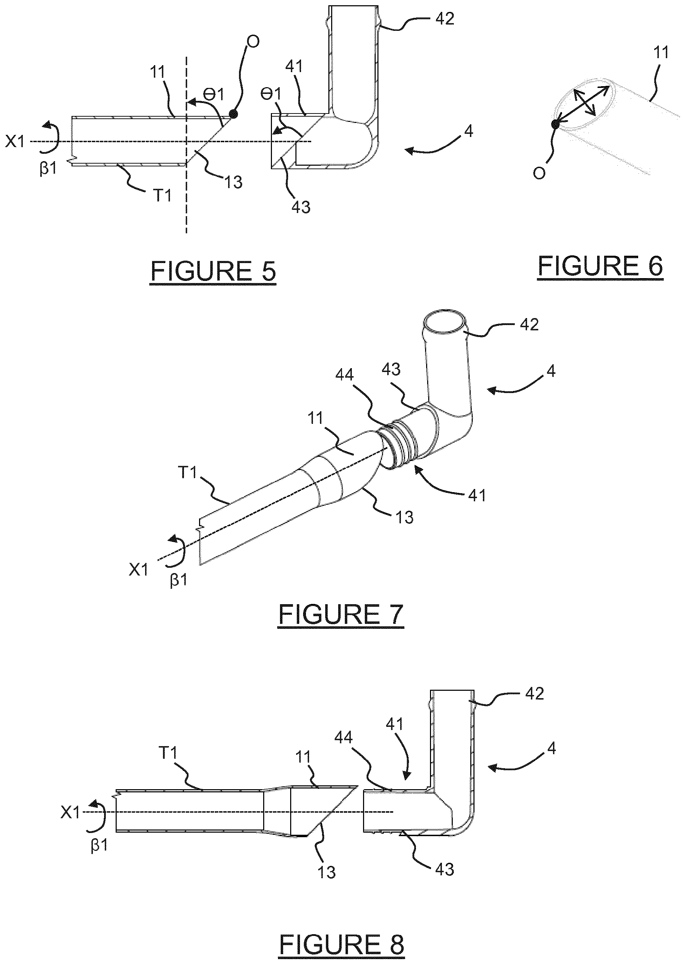

En référence à la figure 5, dans une première forme de réalisation, la première extrémité ouverte 11 du premier corps tubulaire creux T1 est une extrémité de type mâle tandis que la première extrémité ouverte 41 du raccord de connexion 4 est de type femelle de manière à permettre un emboitement longitudinal selon le premier axe d'emboitement X1. De manière avantageuse, la première extrémité ouverte 41 du raccord de connexion 4 se présente sous la forme d'une chemise cylindrique orientée selon le premier axe d'emboitement X1 afin de guider la première extrémité ouverte 11 du premier corps tubulaire creux T1 lors de l'emboitement. L'alignement selon le premier axe d'emboitement X1 est ainsi facilité.

Toujours en référence à la figure 5, la première extrémité ouverte 11 du premier corps tubulaire creux T1 et la première extrémité ouverte 41 du raccord de connexion 4 comportent respectivement des surfaces de butée longitudinale 13, 43 qui coopèrent par complémentarité de formes lorsqu'elles sont en butée longitudinale de manière à former une portion cylindrique s'étendant selon le premier axe d'emboitement X1.

Dans cet exemple, en référence aux figures 5 et 6, la première extrémité ouverte 11 du premier corps tubulaire creux T1 est biseautée à son extrémité libre. La surface de butée longitudinale 13 s'étend dans un plan d'interface qui est incliné d'un premier angle de butée Θ1 par rapport au plan orthogonal au premier axe d'emboitement X1 de manière à permettre un détrompage angulaire. Aussi, chaque surface de butée longitudinale 13, 43 possède une forme elliptique.

De manière préférée, le premier angle de butée Θ1 est compris entre 20° et 70°, de préférence encore, entre 30° et 45°. Un tel premier angle de butée Θ1 assure un détrompage angulaire tout en assurant une étanchéité optimale.

La surface de butée longitudinale 43 du raccord de connexion 4 s'étend intérieurement à la première extrémité ouverte 41 de type femelle. En particulier, la surface de butée longitudinale 43 s'étend dans la chemise cylindrique dont la première extrémité ouverte 41 a la forme. De manière analogue, la surface de butée longitudinale 43 s'étend dans un plan d'interface qui est incliné d'un premier angle de butée Θ1 par rapport au plan orthogonal au premier axe d'emboitement X1 de manière à permettre un détrompage angulaire. En effet, la surface de butée longitudinale 13 du premier corps tubulaire creux T1 ne peut coopérer avec la surface de butée longitudinale 43 du raccord de connexion 4 que selon une première position angulaire prédéterminée β1 par rapport au premier axe d'emboitement X1 du fait du guidage longitudinal réalisé par la chemise cylindrique et du fait de la complémentarité des surfaces de butée longitudinale 13, 43.

Grâce à l'invention, il n'est avantageusement pas nécessaire de recourir à un gabarit comme dans l'art antérieur. De plus, l'utilisation d'extrémités mâle/femelle permet d'assurer un guidage optimal suite à un alignement selon le premier axe d'emboitement X1. Enfin, la complémentarité des surfaces de butée longitudinale 13, 43 permet, d'une part, de réaliser un détrompage angulaire et, d'autre part, d'assurer une étanchéité par complémentarité de formes. Le circuit de fluide CF est ainsi simple à assembler tout en ayant une durée de vie importante.

En référence aux figures 7 et 8, il est représenté une deuxième forme de réalisation de la connexion entre la première extrémité ouverte 11 du premier corps tubulaire creux T1 et la première extrémité ouverte 41 du raccord de connexion 4.

Dans cet exemple, la première extrémité ouverte 11 du premier corps tubulaire creux T1 est une extrémité de type femelle tandis que la première extrémité ouverte 41 du raccord de connexion 4 est de type mâle de manière à permettre un emboitement longitudinal selon le premier axe d'emboitement X1. De manière avantageuse, la première extrémité ouverte 11 du premier corps tubulaire creux T1 se présente sous la forme d'une chemise cylindrique orientée selon le premier axe d'emboitement X1 afin de guider la première extrémité ouverte 41 du raccord de connexion 4 lors de l'emboitement. La première extrémité ouverte 41 du raccord de connexion 4 comporte un insert cylindrique creux 44 adapté pour être introduit dans la cavité intérieure de la chemise cylindrique 11. Dans cet exemple, l'insert cylindrique creux 44 comporte sur sa surface extérieure une pluralité d'organes d'étanchéité afin de coopérer avec la surface intérieure de la chemise cylindrique, par exemple, des lèvres.

Toujours en référence aux figures 7 et 8, la première extrémité ouverte 11 du premier corps tubulaire creux T1 se présente sous la forme d'une chemise cylindrique qui est biseautée à son extrémité libre. La surface de butée longitudinale 13 s'étend dans un plan d'interface qui est inclinée d'un premier angle de butée Θ1 par rapport au plan orthogonal au premier axe d'emboitement X1 de manière à permettre un détrompage angulaire.

La surface de butée longitudinale 43 du raccord de connexion 4 ne s'étend pas à l'extrémité de l'insert cylindrique creux 44 mais est décalée par rapport à son extrémité comme illustré à la figure 7 de manière à permettre un guidage longitudinal selon le premier axe d'emboitement X1 avant de faire coopérer les surfaces de butée longitudinale 13, 43. La surface de butée longitudinale 43 s'étend extérieurement à l'insert cylindrique creux 44.

De manière analogue, la surface de butée longitudinale 43 s'étend dans un plan d'interface qui est incliné d'un premier angle de butée Θ1 par rapport au plan orthogonal au premier axe d'emboitement X1 de manière à permettre un détrompage angulaire. En effet, la surface de butée longitudinale 13 du premier corps tubulaire creux T1 ne peut coopérer avec la surface de butée longitudinale 43 du raccord de connexion 4 que selon une première position angulaire prédéterminée β1 par rapport au premier axe d'emboitement X1 du fait du guidage longitudinal réalisé par la chemise cylindrique et du fait de la complémentarité des surfaces de butée longitudinale 13, 43.

Dans la première forme de réalisation (figures 5-6), les surfaces de butée longitudinale 13, 43 coopèrent intérieurement tandis que, dans la deuxième forme de réalisation (figures 7-8), les surfaces de butée longitudinale 13, 43 coopèrent extérieurement.

De manière préférée, les extrémités ouvertes 11, 41 sont chauffées préalablement à leur assemblage.

En référence de nouveau à la figure 4, de manière analogue au premier corps tubulaire creux T1, le deuxième corps tubulaire creux T2 comprend une première extrémité ouverte 21 et une deuxième extrémité ouverte 22 qui sont reliées fluidiquement. De manière préférée, le deuxième corps tubulaire creux T2 s'étend longitudinalement et comprend une ou plusieurs portions cintrées 6. De même, le deuxième corps tubulaire creux T2 est réalisé en matériau thermoplastique et possède une section annulaire.

Comme illustré à la figure 4, le deuxième corps tubulaire creux T2 est relié au premier corps tubulaire creux T1 par un raccord de piquage 5. Un raccord de piquage 5 est adapté pour se connecter latéralement à un corps tubulaire afin de former un circuit de fluide CF ayant au moins trois branches. Les corps tubulaires creux T1, T2 sont rigides.

Dans cet exemple, le raccord de piquage 5 comporte une première extrémité ouverte 51 et une deuxième extrémité ouverte 52 qui sont reliées fluidiquement. Néanmoins, il va de soi que le raccord de piquage 5 pourrait comprendre plus de deux extrémités ouvertes 51, 52.

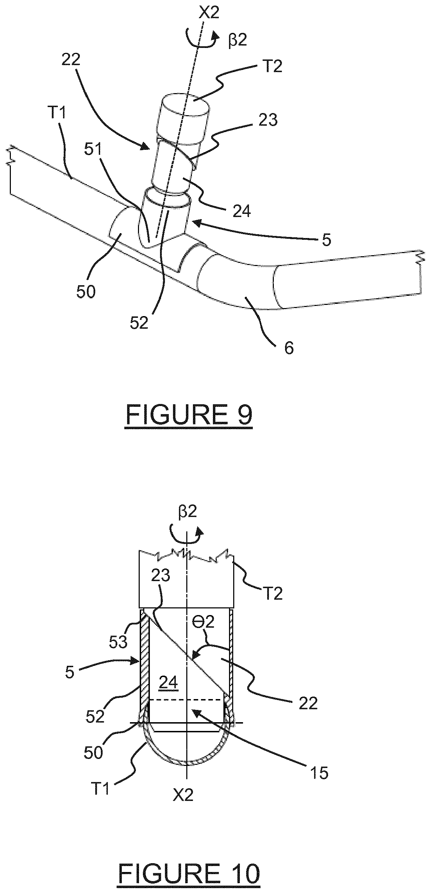

La première extrémité ouverte 51 du raccord de piquage 5 est connectée de manière étanche dans une ouverture latérale 15 du premier corps tubulaire creux T1 (figure 10). La deuxième extrémité ouverte 52 du raccord de piquage 5 s'étend selon un deuxième axe d'emboitement X2 afin de permettre un emboitement avec la deuxième extrémité ouverte 22 du deuxième corps tubulaire creux T2.

Dans cette forme de réalisation, le raccord de piquage 5 comporte une enveloppe de montage 50 à la périphérie de la première extrémité ouverte 51 de manière à coopérer avec la surface extérieure cylindrique du premier corps tubulaire creux T1 et ainsi positionner de manière précise la première extrémité ouverte 51 du raccord de piquage 5 avec l'ouverture latérale 15 formée dans le premier corps tubulaire creux T1. Dans cet exemple, en référence à la figure 9, l'enveloppe de montage 50 possède une forme semi-cylindrique mais il va de soi qu'elle pourrait se présenter sous une forme différente, en particulier, sous la forme d'une pluralité de languettes incurvée, afin de réaliser une liaison précise avec le premier corps tubulaire creux T1.

De manière analogue à ce qui a été présenté précédemment pour la connexion du raccord de connexion 4 avec le premier corps tubulaire creux T1, le raccord de piquage 5 et le deuxième corps tubulaire creux T2 comportent respectivement des surfaces de butée longitudinale 23, 53 inclinées d'un deuxième angle de butée Θ2 par rapport au plan orthogonal au deuxième axe d'emboitement X2 de manière à permettre un détrompage angulaire. Le contact des surfaces de butée longitudinal peut être réalisé intérieurement comme dans la première forme de réalisation ou extérieurement comme dans la deuxième forme de réalisation. De manière préférée, le deuxième angle de butée Θ2 est compris entre 20° et 70°, de préférence encore, entre 30° et 45°. De manière préférée, un même angle de butée Θ1, Θ2 est utilisé pour limiter les coûts de fabrication et faciliter l'industrialisation.

En référence aux figures 9 et 10, la deuxième extrémité ouverte 52 du raccord de piquage 5 est du type femelle tandis que la deuxième extrémité ouverte 22 du deuxième corps tubulaire T2 est du type mâle et comporte un insert cylindrique creux 24. De manière avantageuse, l'insert cylindrique creux 24 du deuxième corps tubulaire creux T2 permet de conduire un fluide, assurer un alignement et un détrompage angulaire avec le raccord de piquage 5 mais permet également de s'étendre dans l'ouverture latérale 15 du premier corps tubulaire creux T1 afin de fixer la position angulaire du raccord de piquage 5 par rapport au premier corps tubulaire creux T1.

De manière avantageuse, la deuxième extrémité ouverte 22 du deuxième corps tubulaire creux cintré T2 est orientée par rapport à la deuxième extrémité ouverte 52 du raccord de piquage 5 selon une deuxième position angulaire prédéterminée β2 par rapport au deuxième axe d'emboitement X2.

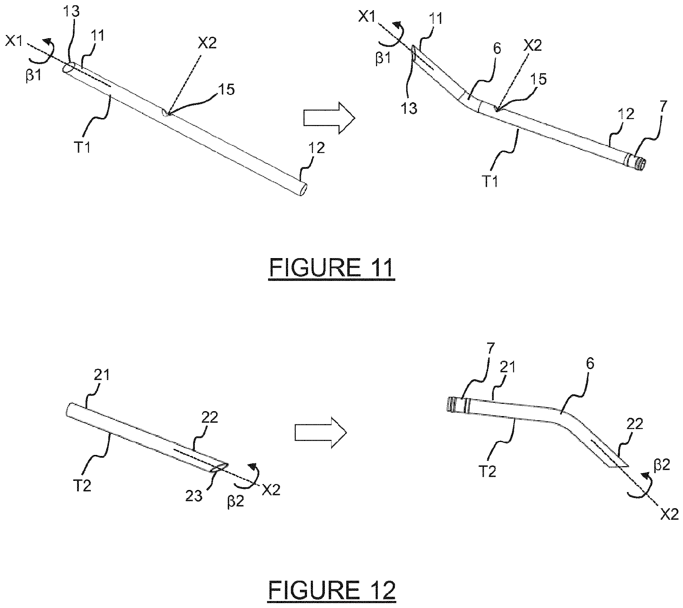

Un exemple de mise en oeuvre d'un procédé de fabrication et d'assemblage d'un circuit de fluide selon l'invention va être dorénavant présenté en référence aux figures 11 à 15.

Comme illustré à la figure 11, le premier corps tubulaire creux T1 s'étend rectilignement selon un premier axe d'emboitement X1 et possède une section transversale annulaire. Le premier corps tubulaire creux T1 comporte une première extrémité ouverte 11 et une deuxième extrémité ouverte 12 ainsi qu'une ouverture latérale 15 destinée à recevoir un raccord de piquage 5.

Dans cet exemple, le procédé comporte une étape de formation d'une surface de butée longitudinale elliptique 13 au niveau de la première extrémité ouverte 11 du premier corps tubulaire creux T1 comme illustré à la figure 6. Comme indiqué précédemment, la surface de butée longitudinale 13 s'étend dans un plan d'interface qui est incliné d'un premier angle de butée Θ1 par rapport au plan orthogonal au premier axe d'emboitement X1 de manière à permettre un détrompage angulaire.

La surface de butée longitudinale elliptique 13 est orientée angulairement et comporte un point angulaire de référence O qui est, dans cet exemple, le point le plus en saillie comme illustré à la figure 6. Il va de soi que le point angulaire de référence O pourrait être choisi de manière différente.

De manière avantageuse, l'ouverture latérale 15 est formée dans le premier corps tubulaire creux T1 en fonction du point angulaire de référence O. Dans cet exemple, l'ouverture latérale 15 est adaptée pour recevoir le raccord de piquage 5 selon le deuxième axe de raccordement X2. Autrement dit, l'orientation du deuxième axe de raccordement X2 est définie par rapport au point angulaire de référence O.

Le procédé comporte ensuite une étape d'orientation angulaire de la surface de butée longitudinale 13 du premier corps tubulaire creux T1 dans une machine de cintrage. Dans cet exemple, le premier corps tubulaire creux T1 est tourné autour de son premier axe d'emboitement X1 afin que le point angulaire de référence O soit dans une position angulaire de référence de la machine de cintrage. De manière préférée, la machine de cintrage comporte un gabarit afin de permettre une orientation rapide lors du montage du premier corps tubulaire rectiligne T1 dans la machine de cintrage.

Le procédé comporte ensuite une étape de cintrage d'une portion longitudinale du premier corps tubulaire creux T1. Ainsi, la portion cintrée 6 est définie précisément par rapport au point angulaire de référence O.

En référence à la figure 11, le premier corps tubulaire creux T1 comporte, d'une part, une première extrémité ouverte 11 qui est orientée de manière précise selon le premier axe d'emboitement X1 avec un détrompage et, d'autre part, une ouverture latérale 15 qui est orientée de manière précise selon le deuxième axe d'emboitement X2. Dans cet exemple, un raccord droit 7 est monté à la deuxième extrémité ouverte 12 du premier corps tubulaire creux T1.

De manière préférée, la surface de butée longitudinale 13 est réalisée directement par la machine de cintrage afin de définir automatiquement la position angulaire de référence dans le référentiel de la machine de cintrage. De préférence, l'ouverture latérale 15 est également réalisée directement par la machine de cintrage dans le même référentiel. Le gain de temps est important.

En référence dorénavant à la figure 12, le deuxième corps tubulaire creux T2 s'étend rectilignement selon un deuxième axe d'emboitement X2 et possède une section transversale annulaire. Le deuxième corps tubulaire creux T2 comporte une première extrémité ouverte 21 et une deuxième extrémité ouverte 22.

De manière analogue à précédemment, le procédé comporte une étape de formation d'une surface de butée longitudinale elliptique 23 au niveau de la deuxième extrémité ouverte 22 du deuxième corps tubulaire creux T2. Comme indiqué précédemment, la surface de butée longitudinale 23 s'étend dans un plan d'interface qui est incliné d'un deuxième angle de butée Θ2 par rapport au plan orthogonal au deuxième axe d'emboitement X2 de manière à permettre un détrompage angulaire.

De manière analogue, la surface de butée longitudinale elliptique 23 est orientée angulairement et comporte un point angulaire de référence O qui est, dans cet exemple, le point le plus en saillie comme illustré à la figure 6. Il va de soi que le point angulaire de référence pourrait être choisi de manière différente.

Le procédé comporte ensuite une étape d'orientation angulaire de la surface de butée longitudinale 23 du deuxième corps tubulaire creux T2 dans une machine de cintrage. Dans cet exemple, le deuxième corps tubulaire creux T2 est tourné autour de son deuxième axe d'emboitement X2 afin que le point angulaire de référence O soit dans une position angulaire de référence de la machine de cintrage. De manière préférée, la machine de cintrage utilise le même gabarit que celui utilisé pour cintrer le premier corps tubulaire creux T1. Si une même surface de butée longitudinale elliptique 23 est utilisée, un même gabarit peut avantageusement être utilisé pour la machine de cintrage. Le procédé comporte ensuite une étape de cintrage d'une portion longitudinale 6 du deuxième corps tubulaire creux T2. Ainsi, la portion cintrée 6 est définie précisément par rapport au point angulaire de référence O.

En référence à la figure 12, le deuxième corps tubulaire creux T2 comporte une deuxième extrémité ouverte 22 qui est orientée de manière précise selon le deuxième axe d'emboitement X2 avec un détrompage. Dans cet exemple, un raccord droit 7 est monté à la première extrémité ouverte 21 du deuxième corps tubulaire creux T2.

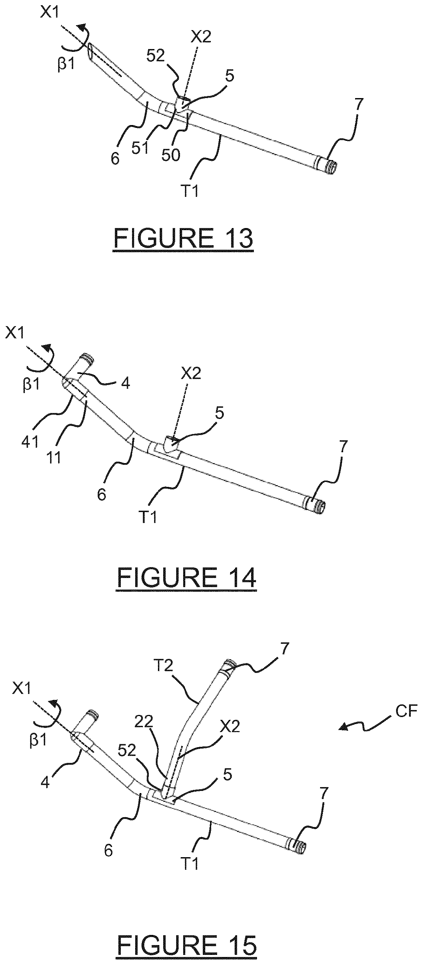

Comme illustré à la figure 13, le procédé comporte ensuite une étape d'assemblage du raccord de piquage 5 avec le premier corps tubulaire creux T1. L'enveloppe de montage 50 du raccord de piquage 5 est montée sur l'ouverture latérale 15 du premier corps tubulaire creux T1 (voir figure 11) afin que l'ouverture latérale 15 débouche dans la première extrémité ouverte 51 du raccord de piquage 5. De manière avantageuse, le raccord de piquage 5 peut tourner autour de la portion cylindrique dans laquelle est formée l'ouverture latérale 15 en l'absence de connexion avec le deuxième corps tubulaire creux T2.

En référence à la figure 14, le raccord de connexion 4 est monté à la première extrémité ouverte 11 du premier corps tubulaire creux T1 selon un premier mode de réalisation présenté précédemment en référence à la figure 5. Une telle connexion est réalisée par translation selon le premier axe d'emboitement X1 puis rotation autour de ce premier axe d'emboitement X1 jusqu'à obtenir une coopération des surfaces longitudinales de butée 13, 43 à la première position angulaire déterminée β1. Suite à la connexion, la deuxième extrémité ouverte 42 du raccord de connexion 4 est orientée de manière précise, ce qui est avantageux.

Ensuite, comme illustré à la figure 15, le procédé comporte une étape de montage du deuxième corps tubulaire creux T2 dans la deuxième extrémité ouverte 52 du raccord de piquage 5 afin d'orienter précisément le deuxième corps tubulaire creux T2 selon la deuxième position angulaire déterminée β2. Les surfaces de butée longitudinale 23, 53 permettent d'assurer un détrompage angulaire entre le raccord de piquage 5 et le deuxième corps tubulaire creux T2 tandis que l'insert cylindrique creux 24 du deuxième corps tubulaire creux T2 permet de verrouiller la position angulaire du raccord de piquage 5 par rapport au premier corps tubulaire creux T1 en s'introduisant dans l'ouverture latérale 15 comme illustré à la figure 10. Une telle connexion est réalisée par translation selon le deuxième axe d'emboitement X2 puis rotation autour de ce deuxième axe d'emboitement X2 jusqu'à obtenir une coopération des surfaces longitudinales de butée 23, 53 à la deuxième position angulaire déterminée β2.

Grâce à l'invention, le circuit de fluide peut être assemblé de manière pratique et rapide sans utiliser un gabarit d'assemblage spécifique comme cela était le cas dans l'art antérieur. L'utilisation d'une surface de butée longitudinale oblique permet d'assurer un détrompage pratique et rapide tout en étant simple et peu coûteux à réaliser.

Suite à l'assemblage, la position des éléments du circuit de fluide peut être fixée de manière définitive, par exemple, par soudure laser, refroidissement, collage, sertissage, frittage ou autre.

## Revendications

1. Procédé de fabrication d'un circuit de fluide (CF) comportant :
- au moins un premier corps tubulaire creux (T1) comprenant au moins une première extrémité ouverte (11) et une deuxième extrémité ouverte (12) qui sont reliées fluidiquement, le premier corps tubulaire creux (T1) s'étendant rectilignement selon un premier axe d'emboitement (X1),
- au moins un raccord de connexion (4) comprenant au moins une première extrémité ouverte (41) et une deuxième extrémité ouverte (42) qui sont reliées fluidiquement, la première extrémité ouverte (11) du premier corps tubulaire creux (T1) étant connectée à la première extrémité ouverte (41) du raccord de connexion (4) de manière étanche selon un premier axe d'emboitement (X1),
- une desdites premières extrémités ouvertes (11, 41) étant une extrémité de type mâle, l'autre desdites premières extrémités ouvertes (11, 41) étant de type femelle de manière à permettre un emboitement longitudinal selon le premier axe d'emboitement (X1),
- chaque première extrémité ouverte (11, 41) comporte une surface de butée longitudinale (13, 43), les surfaces de butée longitudinale (13, 43) coopérant par complémentarité de formes de manière à former une portion cylindrique s'étendant selon le premier axe d'emboitement (X1) ; le procédé comporte :
- une étape de formation de la surface de butée longitudinale (13) à la première extrémité ouverte (11) du premier corps tubulaire creux (T1), la surface de butée longitudinale (13) s'étendant dans un plan d'interface qui est incliné d'un premier angle de butée (Θ1) par rapport au plan orthogonal au premier axe d'emboitement (X1),
- une étape d'orientation angulaire de la surface de butée longitudinale (13) du premier corps tubulaire creux (T1) dans une machine de cintrage à une position angulaire de référence,
- une étape de cintrage d'une portion longitudinale du premier corps tubulaire creux (T1) dans la position angulaire de référence, et
- une étape de connexion étanche de la première extrémité ouverte (11) du premier corps tubulaire creux (T1) à la première extrémité ouverte (41) du raccord de connexion (4) de manière étanche selon le premier axe d'emboitement (X1), les surfaces de butée longitudinale (13, 43) entrant en contact dans un plan d'interface qui est incliné d'un premier angle de butée (Θ1) par rapport au plan orthogonal au premier axe d'emboitement (X1) de manière à permettre un détrompage angulaire, la première extrémité ouverte (11) du premier corps tubulaire creux (T1) étant orientée par rapport à la première extrémité ouverte (41) du raccord de connexion (4) selon une première position angulaire prédéterminée (β1) par rapport au premier axe d'emboitement (X1).

2. Procédé de fabrication selon la revendication 1, comportant une étape de réalisation d'une ouverture latérale (15) dans le premier corps tubulaire creux (T1) selon une position angulaire de référence préalablement à l'étape de cintrage.

3. Procédé de fabrication selon l'une des revendications 1 à 2, dans lequel le premier angle de butée (Θ1) est compris entre 20° et 70°, de préférence, entre 30° et 45°.

4. Procédé de fabrication selon l'une des revendications 1 à 3, dans lequel chaque surface de butée longitudinale (11, 41) possède une forme elliptique.

5. Procédé de fabrication selon l'une des revendications 1 à 4, dans lequel la première extrémité ouverte de type mâle (41) comporte un insert cylindrique creux (44) et une surface de butée longitudinale (43) s'étendant sur la surface extérieure de l'insert cylindrique creux (44).

6. Procédé de fabrication selon l'une des revendications 1 à 5, dans lequel la première extrémité ouverte de type femelle (11, 41) se présente sous la forme d'une chemise cylindrique de guidage.

7. Procédé de fabrication selon l'une des revendications 1 à 6, le circuit de fluide (CF) comportant au moins un raccord de piquage (5) comprenant au moins une première extrémité ouverte (51) et une deuxième extrémité ouverte (52) qui sont reliées fluidiquement, la première extrémité ouverte (51) du raccord de piquage (5) étant connectée de manière étanche dans une ouverture latérale (15) du premier corps tubulaire creux (T1), la deuxième extrémité ouverte (52) du raccord de piquage (5) s'étendant selon un deuxième axe d'emboitement (X2), la deuxième extrémité ouverte (52) comportant une surface de butée longitudinale (53) inclinée d'un deuxième angle de butée (Θ2) par rapport au plan orthogonal au deuxième axe d'emboitement (X2) de manière à permettre un détrompage angulaire.

8. Procédé de fabrication selon la revendication 7, le circuit de fluide (CF) comportant :
- un deuxième corps tubulaire creux (T2) comprenant au moins une portion cintrée (6), au moins une première extrémité ouverte (21) et une deuxième extrémité ouverte (22) qui sont reliées fluidiquement, la deuxième extrémité ouverte (22) du deuxième corps tubulaire creux (T2) étant connectée à la deuxième extrémité ouverte (52) du raccord de piquage (5) de manière étanche selon le deuxième axe d'emboitement (X2),
- une desdites deuxièmes extrémités ouvertes (22, 52) étant une extrémité de type mâle, l'autre desdites deuxièmes extrémités ouvertes (22, 52) étant de type femelle de manière à permettre un emboitement longitudinal selon le deuxième axe d'emboitement (X2),
- chaque deuxième extrémité ouverte (22, 52) comporte une surface de butée longitudinale (23, 53), les surfaces de butée longitudinale (23, 53) coopérant par complémentarité de formes de manière à former une portion cylindrique s'étendant selon le deuxième axe d'emboitement (X2), les surfaces de butée longitudinale (23, 53) entrant en contact dans un plan d'interface qui est incliné d'un deuxième angle de butée (Θ2) par rapport au plan orthogonal au deuxième d'emboitement (X2) de manière à permettre un détrompage angulaire, la deuxième extrémité ouverte (22) du deuxième corps tubulaire creux (T2) étant orientée par rapport à la deuxième extrémité ouverte (52) du raccord de piquage (5) selon une deuxième position angulaire prédéterminée (β2) par rapport au deuxième axe d'emboitement (X2).

9. Procédé de fabrication selon la revendication 8 dans lequel, la deuxième extrémité ouverte (22) du deuxième corps tubulaire creux cintré (T2) étant une extrémité de type mâle, la deuxième extrémité ouverte (22) est montée dans l'ouverture latérale (15) du premier corps tubulaire creux (T1).

## Patentansprüche

1. Verfahren zur Herstellung eines Fluidkreislaufs (CF), aufweisend :
- mindestens einen ersten rohrförmigen Hohlkörper (T1), der mindestens ein erstes offenes Ende (11) und ein zweites offenes Ende (12) umfasst, die fluidisch verbunden sind, wobei sich der erste rohrförmige Hohlkörper (T1) gerade gemäß einer ersten Steckachse (X1) erstreckt,
- mindestens einen Verbindungsanschluss (4), der mindestens ein erstes offenes Ende (41) und ein zweites offenes Ende (42) umfasst, die fluidisch verbunden sind, wobei das erste offene Ende (11) des ersten rohrförmigen Hohlkörpers (T1) an das erste offene Ende (41) des Verbindungsanschlusses (4) gemäß einer ersten Steckachse (X1) dicht angeschlossen ist,
- wobei eins der ersten offenen Enden (11, 41) ein Ende vom Steckertyp ist, wobei das andere der ersten offenen Enden (11, 41) vom Buchsentyp ist, so dass ein Einstecken längs gemäß der ersten Steckachse (X1) gestattet ist,
- wobei jedes erste offene Ende (11, 41) eine Längsanschlagfläche (13, 43) aufweist, wobei die Längsanschlagflächen (13, 43) durch Formkomplementarität derart zusammenwirken, dass ein zylindrischer Abschnitt gebildet wird, der sich gemäß der ersten Steckachse (X1) erstreckt;
wobei das Verfahren aufweist:
- einen Schritt des Bildens der Längsanschlagfläche (13) am ersten offenen Ende (11) des ersten rohrförmigen Hohlkörpers (T1), wobei sich die Längsanschlagfläche (13) in einer Schnittstellenebene erstreckt, die in einem ersten Anschlagwinkel (θ1) in Bezug auf die orthogonale Ebene zur ersten Steckachse (X1) schräg ist,
- einen Schritt der Winkelausrichtung der Längsanschlagfläche (13) des ersten rohrförmigen Hohlkörpers (T1) in einer Biegemaschine in eine Referenz-Winkelposition,
- einen Schritt des Biegens eines Längsabschnitts des ersten rohrförmigen Hohlkörpers (T1) in die Referenz-Winkelposition, und
- einen Schritt des dichten Anschließens des ersten offenen Endes (11) des ersten rohrförmigen Hohlkörpers (T1) an das erste offene Ende (41) des Verbindungsanschlusses (4) gemäß der ersten Steckachse (X1), wobei die Längsanschlagflächen (13, 43) in einer Schnittstellenebene in Kontakt treten, die in einem ersten Anschlagwinkel (θ1) in Bezug auf die orthogonale Ebene zur ersten Steckachse (X1) derart schräg ist, dass eine Winkelunverwechselbarkeit gestattet ist, wobei das erste offene Ende (11) des ersten rohrförmigen Hohlkörpers (T1) in Bezug auf das erste offene Ende (41) des Verbindungsanschlusses (4) gemäß einer ersten vorbestimmten Winkelposition (β1) in Bezug auf die erste Steckachse (X1) ausgerichtet ist.

2. Herstellungsverfahren nach Anspruch 1, aufweisend einen Schritt des Herstellens einer seitlichen Öffnung (15) im ersten rohrförmigen Hohlkörper (T1) gemäß einer Referenz-Winkelposition vor dem Schritt des Biegens.

3. Herstellungsverfahren nach einem der Ansprüche 1 bis 2, wobei der erste Anschlagwinkel (θ1) zwischen 20° und 70°, vorzugsweise zwischen 30° und 45° liegt.

4. Herstellungsverfahren nach einem der Ansprüche 1 bis 3, wobei jede Längsanschlagfläche (11, 41) eine elliptische Form besitzt.

5. Herstellungsverfahren nach einem der Ansprüche 1 bis 4, wobei das erste offene Ende vom Steckertyp (41) einen hohlen zylindrischen Einsatz (44) aufweist und eine Längsanschlagfläche (43), die sich auf der äußeren Oberfläche des hohlen zylindrischen Einsatzes (44) erstreckt.

6. Herstellungsverfahren nach einem der Ansprüche 1 bis 5, wobei das erste offene Ende vom Buchsentyp (11, 41) in Form eines zylindrischen Führungsmantels vorliegt.

7. Herstellungsverfahren nach einem der Ansprüche 1 bis 6, wobei der Fluidkreislauf CF mindestens einen Abzweigungsanschluss (5) aufweist, der mindestens ein erstes offenes Ende (51) und ein zweites offenes Ende (52) umfasst, die fluidisch verbunden sind, wobei das erste offene Ende (51) des Abzweigungsanschlusses (5) in einer seitlichen Öffnung (15) des ersten rohrförmigen Hohlkörpers (T1) dicht angeschlossen ist, wobei sich das zweite offene Ende (52) des Abzweigungsanschlusses (5) gemäß einer zweiten Steckachse (X2) erstreckt, wobei das zweite offene Ende (52) eine in einem zweiten Anschlagwinkel (θ2) in Bezug auf die orthogonale Ebene zur zweiten Steckachse (X2) schräge Längsanschlagfläche (53) derart aufweist, dass eine Winkelunverwechselbarkeit gestattet ist.

8. Herstellungsverfahren nach Anspruch 7, wobei der Fluidkreislauf (CF) aufweist:
- einen zweiten rohrförmigen Hohlkörper (T2), der mindestens einen gebogenen Abschnitt (6), mindestens ein erstes offenes Ende (21) und ein zweites offenes Ende (22) aufweist, die fludisch verbunden sind, wobei das zweite offene Ende (22) des zweiten rohrförmigen Hohlkörpers (T2) am zweiten offenen Ende (52) des Abzweigungsanschlusses (5) gemäß der zweiten Steckachse (X2) dicht angeschlossen ist,
- wobei eins der zweiten offenen Enden (22, 52) ein Ende vom Steckertyp ist, wobei das andere der zweiten offenen Enden (22, 52) vom Buchsentyp ist, so dass ein Einstecken längs gemäß der zweiten Steckachse (X2) gestattet ist,
- wobei jedes zweite offene Ende (22, 52) eine Längsanschlagfläche (23, 53) aufweist, wobei die Längsanschlagflächen (23, 53) durch Formkomplementarität derart zusammenwirken, dass ein zylindrischer Abschnitt gebildet wird, der sich gemäß der zweiten Steckachse (X2) erstreckt; wobei die Längsanschlagflächen (23, 53) in einer Schnittstellenebene in Kontakt treten, die in einem zweiten Anschlagwinkel (θ2) in Bezug auf die orthogonale Ebene zur ersten Steckachse (X2) derart schräg ist, dass eine Winkelunverwechselbarkeit gestattet ist, wobei das zweite offene Ende (22) des zweiten rohrförmigen Hohlkörpers (T2) in Bezug auf das zweite offene Ende (52) des Verbindungsanschlusses (5) gemäß einer zweiten vorbestimmten Winkelposition (β2) in Bezug auf die zweite Steckachse (X1) ausgerichtet ist.

9. Herstellungsverfahren nach Anspruch 8 wobei, wobei das zweite offene Ende (22) des zweiten gebogenen rohrförmigen Hohlkörpers (T2) ein Ende vom Steckertyp ist, das zweite offene Ende (22) in der seitlichen Öffnung (15) des ersten rohrförmigen Hohlkörpers (T1) angebracht ist.

## Claims

1. Method for manufacturing a fluid circuit (CF) comprising:
- at least one first hollow tubular body (T1) comprising at least one first open end (11) and a second open end (12) that are fluidly connected, the first hollow tubular body (T1) extending straight along a first fitting axis (X1),
- at least one connector (4) comprising at least one first open end (41) and a second open end (42) that are fluidly connected, the first open end (11) of the first hollow tubular body (T1) being connected to the first open end (41) of the connector (4) in a sealed manner along a first fitting axis (X1),
- one of said first open ends (11, 41) being a male type end, the other of said first open ends (11, 41) being a female type so as to permit longitudinal fitting along the first fitting axis (X1),
- each first open end (11, 41) comprises a longitudinal abutment surface (13, 43), the longitudinal abutment surfaces (13, 43) cooperating by complementarity of shapes so as to form a cylindrical portion extending along the first fitting axis (X1);
the method comprises:
- a step of forming the longitudinal abutment surface (13) at the first open end (11) of the first hollow tubular body (T1), the longitudinal abutment surface (13) extending in an interface plane that is inclined by a first abutment angle (Θ1) with respect to the plane orthogonal to the first fitting axis (X1),
- a step of angular orientation of the longitudinal abutment surface (13) of the first hollow tubular body (T1) in a bending machine at a reference angular position,
- a step of bending a longitudinal portion of the first hollow tubular body (T1) in the reference angular position, and
- a step of sealed connecting of the first open end (11) of the first hollow tubular body (T1) to the first open end (41) of the connector (4) in a sealed manner along the first fitting axis (X1), the longitudinal abutment surfaces (13, 43) coming into contact in an interface plane that is inclined by a first abutment angle (Θ1) with respect to the plane orthogonal to the first fitting axis (X1) so as to avoid angular misalignment, the first open end (11) of the first hollow tubular body (T1) being oriented with respect to the first open end (41) of the connector (4) according to a first predetermined angular position (β1) with respect to the first fitting axis (X1).

2. Method of manufacturing according to claim 1, comprising a step of making a side opening (15) in the first hollow tubular body (T1) according to a reference angular position prior to the bending step.

3. Method of manufacturing according to one of claims 1 to 2, wherein the first abutment angle (Θ1) is between 20° and 70°, preferably, between 30° and 45°.

4. Method of manufacturing according to any one of claims 1 to 3, wherein each longitudinal abutment surface (11, 41) has an elliptical shape.

5. Method of manufacturing according to one of claims 1 to 4, wherein the first male type open end (41) includes a hollow cylindrical insert (44) and a longitudinal abutment surface (43) extending on the outer surface of the hollow cylindrical insert (44).

6. Method of manufacturing according to one of claims 1 to 5, wherein the first female type open end (11, 41) is in the form of a cylindrical guide sleeve.

7. Method of manufacturing according to one of claims 1 to 6, the fluid circuit (CF) comprising at least one tapping connector (5) comprising at least one first open end (51) and a second open end (52) that are fluidly connected, the first open end (51) of the tapping connector (5) being connected in a sealed manner in a side opening (15) of the first hollow tubular body (T1), the second open end (52) of the tapping connector (5) extending along a second fitting axis (X2), the second open end (52) comprising a longitudinal abutment surface (53) inclined by a second abutment angle (Θ2) with respect to the plane orthogonal to the second fitting axis (X2) so as to avoid angular misalignment.

8. Method of manufacturing according to claim 7, the fluid circuit (CF) comprising:
- a second hollow tubular body (T2) comprising at least one bent portion (6), at least one first open end (21) and a second open end (22) that are fluidly connected, the second open end (22) of the second hollow tubular body (T2) being connected to the second open end (52) of the tapping connector (5) in a watertight manner along the second fitting axis (X2),
- one of said second open ends (22, 52) being a male type end, the other of said second open ends (22, 52) being female type so as to allow longitudinal fitting along the second fitting axis (X2),
- each second open end (22, 52) comprises a longitudinal abutment surface (23, 53), the longitudinal abutment surfaces (23, 53) cooperating by complementarity of shapes so as to form a cylindrical portion extending along the second fitting axis (X2), the longitudinal abutment surfaces (23, 53) coming into contact in an interface plane that is inclined by a second abutment angle (Θ2) with respect to the plane orthogonal to the second fitting (X2) so as to avoid angular misalignment, the second open end (22) of the second hollow tubular body (T2) being oriented with respect to the second open end (52) of the tapping connector (5) according to a second predetermined angular position (P2) with respect to the second fitting axis (X2).

9. Method of manufacturing according to claim 8 wherein, the second open end (22) of the second hollow bent tubular body (T2) being a male type end, the second open end (22) is mounted in the side opening (15) of the first hollow tubular body (T1).
